# EUROPÄISCHE PATENTSCHRIFT

(11) **EP 0 971 802 B1**
(45) Veröffentlichungstag und Bekanntmachung des Hinweises auf die Patenterteilung: **02.04.2003**
(21) Anmeldenummer: 98908095.7
(22) Anmeldetag: 13.02.1998
(51) Int. Cl.: B07C 5/10, B07C 5/342, G06K 9/64, G06T 7/00, G06T 7/60, G01B 11/24

(54) **VERFAHREN UND VORRICHTUNG ZUR ERKENNUNG FALSCH ORIENTIERTER UND/ODER VON EINEM VORGEGEBENEN MUSTER ABWEICHENDER TEILE**
METHOD AND DEVICE FOR DETECTING FALSELY ORIENTED PARTS AND OR PARTS DEVIATING FROM A GIVEN MODEL
PROCEDE ET DISPOSITIF POUR DETECTER DES PIECES MAL ORIENTEES ET/OU S'ECARTANT D'UN MODELE DONNE

(30) Priorität: 02.04.1997 DE 19713521
(43) Veröffentlichungstag der Anmeldung: 19.01.2000
(73) Patentinhaber: Festo AG & Co, 73734 Esslingen (DE)
(72) Erfinder: KRIWET, Ansgar, D-73760 Ostfildern (DE); HUFNAGEL, Herbert, A-1120 Wien (AT)
(74) Vertreter: Vetter, Hans, Dipl.-Phys. Dr.
(86) Internationale Anmeldenummer: EP9800838
(87) Internationale Veröffentlichungsnummer: WO98043752

(56) Entgegenhaltungen:
- EP-A- 0 672 993
- DE-A- 3 239 938
- DE-A- 3 842 636
- DE-A- 4 414 112
- DE-A- 4 419 461
- DE-C- 19 516 274
- US-A- 5 046 120
- US-A- 5 184 733
- PATENT ABSTRACTS OF JAPAN vol. 97, no. 11, 28.November 1997 & JP 09 178444 A (YAMATO SCALE CO LTD), 11.Juli 1997,

## Beschreibung

Die Erfindung betrifft ein Verfahren zur Erkennung falsch orientierter und/oder von einem vorgegebenen Muster abweichender Teile, die mittels einer Fördereinrichtung an wenigstens einer die Konturen der Teile erfassenden Kamera vorbeigeführt werden, wobei bei einer vorgebbaren Abweichung von gespeicherten Musterwerten das betreffende Teil als fehlerhaft erkannt und/oder ausgesondert wird, sowie eine Vorrichtung zur Durchführung des Verfahrens.

Ein derartiges Verfahren ist bereits aus der DE-A-4 414 112 bekannt.

Bei vielen Fertigungseinrichtungen, Montageeinrichtungen, Verpackungseinrichtungen oder dergleichen ist es erforderlich, daß die zu behandelnden Teile vororientiert und in der vorgeschriebenen Orientierung zugeführt werden müssen. Die Zuführung von falschen, beschädigten oder von dem Muster abweichenden Teilen oder von zwar korrekten, jedoch falsch orientierten Teilen führt bei solchen maschinellen Weiterverarbeitungseinrichtungen häufig zu Beschädigungen der Einrichtung selbst, zu Betriebsunterbrechungen oder anderen unerwünschten Folgen. Aus diesem Grunde werden schon seit langem solchen Einrichtungen Prüfvorrichtungen vorgeschaltet, durch die die richtige Lage und/oder die korrekten Maße der Teile überprüft werden. Sogenannte Schlecht-Teile, die diese Prüfung nicht bestehen, werden ausgesondert und nur die Gut-Teile weitertransportiert.

Eine übliche, beispielsweise aus der DE-OS 26 28 358 bekannte Prüfeinrichtung besitzt eine Kamera, mit Hilfe derer die Konturen der mittels einer Fördereinrichtung passierender Teile geprüft werden. Die jeweils erfaßten Konturen werden mit gespeicherten Konturen verglichen. Kann eine Deckungsgleichheit erreicht werden, so handelt es sich um ein Gut-Teil, andernfalls unter Berücksichtigung von Toleranzen um ein Schlecht-Teil, das auszusondern ist. Der Nachteil des bekannten Verfahrens besteht darin, daß bei diesen Verfahren alle Abweichungen von der Musterkontur im Prinzip gleichbewertet werden. Besitzen die zu überprüfenden Teile beispielsweise ein Gewinde, insbesondere ein Feingewinde, so beeinträchtigt dies die Kontur nur sehr geringfügig und die zulässige Toleranz muß sehr stark reduziert werden, damit überhaupt das Vorhandensein des Gewindes erkannt werden kann. Zur Erkennung von Gewindefehlern ist eine weitere Reduzierung der Toleranzgrenzen erforderlich. Werden die Toleranzgrenzen jedoch so stark reduziert, dann können schon minimale Lageabweichungen zu einer Aussonderung führen, so daß die Überprüfung derartiger Strukturen in der Praxis nicht durchführbar ist. Dasselbe gilt beispielsweise für kleine Bohrungen, Rundungen oder dergleichen. Ein weiterer Nachteil des bekannten Verfahrens besteht darin, daß zum Vergleich von Flächenstrukturen für eine gute Auflösung ein sehr großer Speicherplatzbedarf erforderlich ist und die Vergleichsvorgänge eine relativ große Zeit beanspruchen. Das erforderliche Auswertegerät wird dadurch aufwendig und teuer.

Eine Aufgabe der vorliegenden Erfindung besteht daher darin, ein Prüfverfahren der eingangs genannten Gattung zu schaffen, mit Hilfe dessen auch sehr feine Strukturen bei relativ geringem Aufwand sicher erkannt werden können, sowie eine geeignete Vorrichtung zur Durchführung des Verfahrens.

Diese Aufgabe wird erfindungsgemäß dadurch gelöst, daß aus dem der Kontur des jeweiligen Teiles entsprechenden Bildsignal der Kamera mehrere Einzelkriterien, die Gesamtlänge, Gesamthöhe, Fläche, Achsenlage, Oberflächenwelligkeit, Schwerpunktlage, abgeleitet werden, und daß diese Einzelkriterien mit den aus wenigstens einem Musterteil abgeleiteten entsprechenden Einzelkriterien verglichen werden.

Das erfindungsgemäße Verfahren hat den Vorteil, daß nicht mehr alle Bildpunkte einer schlechten Struktur miteinander verglichen werden müssen, sondern lediglich die Werte der aus dem Bildsignal abgeleiteten als Prüfkriterien verwendeten Einzelkriterien. Hierdurch sinkt der Speicherplatzbedarf und der Vergleichsaufwand deutlich gegenüber dem herkömmlichen Verfahren. Da diese Einzelkriterien die typischen und wesentlichen Merkmale und Strukturen des zu prüfenden Teiles erfassen bzw. überprüfen, ist insgesamt eine sichere Erkennung gegeben. Wesentliche, jedoch hinsichtlich ihrer Flächenabweichung kleine Kriterien, wie beispielsweise Gewinde, können dadurch sicher erkannt werden, beispielsweise durch die Auswahl der Oberflächenwelligkeit als Einzelkriterium. Durch geschickte Wahl der Einzelkriterien können kleine Elemente und feine Strukturen individuell geprüft und erkannt werden. Die Erfindung geht dabei von der Erkenntnis aus, daß von vollflächigen Bereichen beispielsweise nur die Randstrukturen für die Erkennung und Prüfung maßgeblich sind, nicht dagegen die dazwischenliegenden vollflächigen Bereiche, die somit auch nicht überprüft werden müssen.

Durch die in den Unteransprüchen aufgeführten Maßnahmen sind vorteilhafte Weiterbildungen und Verbesserungen des im Anspruch 1 angegebenen Verfahrens möglich, und es wird eine vorteilhafte Vorrichtung zur Durchführung des Verfahrens angegeben.

Insbesondere durch unterschiedliche Gewichtung von Einzelkriterien kann erreicht werden, daß auch die Gesamtkontur nur unwesentlich beeinflußende, jedoch sehr wichtige Details sicher erfaßt werden können. Durch Vorwählbarkeit dieser Einzelkriterien kann in besonderem Maße den jeweiligen Besonderheiten eines Teiles Rechnung getragen und die Erkennung optimiert werden.

Weiterhin ist es zur Erkennung von wichtigen Einzelheiten vorteilhaft, das Bildsignal in verschiedene Bereiche zu unterteilen, wobei jeder dieser Bereiche unabhängig voneinander bezüglich der Einzelkriterien ausgewertet wird. Vorzugsweise werden dabei auch die Bereiche unterschiedlich gewichtet, so daß eine noch feinere und exaktere Anpassung an die jeweiligen Besonderheiten eines Teiles möglich sind.

Die unterschiedliche Gewichtung von Einzelkriterien und/oder Bereichen ist in vorteilhafter Weise einstellbar, um auch dadurch optimale Anpassungen vornehmen zu können.

Zur Erfassung von Vergleichsdaten ist wenigstens ein Musterteil in einem Lernprozeß erfaßbar, wobei das entsprechende Bildsignal oder die davon abgeleiteten Einzelkriterien gespeichert werden, um in einem Betriebsmodus für den Vergleich zur Verfügung zu stehen.

Zur schnellen Anpassbarkeit und Umstellung auf verschiedenartige zu überprüfende Teile sind mehrere unterschiedliche Musterteile im Lernmodus erfaßbar, wobei im Betriebsmodus eines dieser Musterteile für den Vergleich auswählbar ist. Zur Umstellung auf eine andere Sorte von zu überprüfenden Teilen muß daher lediglich eine Umstelltaste betätigt werden, sofern das andere Teil bereits eingespeichert ist.

Durch mehrfache Erfassung jedes Musterteiles im Lernmodus oder durch nacheinander erfolgende Erfassung mehrerer Musterteile der selben Sorte kann ein Toleranzbereich vorgegeben werden, da alle diese Musterteile in diesen Toleranzbereich liegen sollen. Beispielsweise können durch leichte Veränderung der Lage des mehrfach einzuspeichernden Musterteiles diejenigen Lageveränderungen miterfaßt werden, die noch innerhalb des Toleranzbereiches liegen sollen.

Über den Betriebsmodus ist die Empfindlichkeit (Toleranz) bei der Erkennung in wenigstens einer Stufe einstellbar, so daß beispielsweise mehrere unterschiedliche Qualitätsstufen vorgegeben werden können und eine Sortierung der Teile in mehrere Sorten möglich ist, für die unterschiedliche Toleranzbedingungen vorgegeben werden können.

Auszusondernde Teile werden zweckmäßigerweise durch wenigstens einen Druckluftstrahl von der Fördereinrichtung weggeblasen. Falls eine mehrstufige Sortierung nach unterschiedlichen Kriterien erfolgen soll, passieren die Teile auf der Fördereinrichtung vorzugsweise mehrere Wegblasstationen, die nach unterschiedlichen Kriterien aussondern.

Die an wenigstens einer Wegblasstation ausgesonderten Teile und/oder die nicht ausgesonderten Teile werden in vorteilhafter Weise mittels einer Zähleinrichtung gezählt, um beispielsweise feststellen zu können, wann eine gewünschte Zahl von Gut-Teilen erreicht ist.

Die Zähleinrichtung kann in vorteilhafter Weise auch dazu verwendet werden, daß bei Erreichen einer vorgebbaren Anzahl von Gut-Teilen und/oder Schlecht-Teilen die Fördereinrichtung und/oder eine Zuführeinrichtung zur Fördereinrichtung, wie eine Sortier- und Richtstation, automatisch abgeschaltet wird. Auch eine nachgeschaltete Maschine, z.B. eine Verpakkungsmaschine, kann entsprechend abgeschaltet oder weitergeschaltet werden, wenn nach einer vorgebbaren Anzahl von Gut-Teilen eine Verpackung gefüllt ist, so daß die nächste Verpackung bereit gestellt werden muß.

Als Kamera wird zweckmäßigerweise eine Zeilenkamera verwendet. Damit wird in vorteilhafter Weise eine zeilenorientierte Verarbeitung möglich, d.h. nach der Erfassung jeder Zeile erfolgt sofort eine entsprechende Berechnung und Auswertung. Dadurch ist die Auswertung nach der Erfassung der letzten Zeile abgeschlossen. Eine Auswertung der Gesamtkontur ist dann nicht erforderlich. Bei geringem Speicherbedarf ist somit eine sehr schnelle Auswertung möglich.

Bei einer vorteilhaften Vorrichtung zur Durchführung des erfindungsgemäßen Verfahrens bildet wenigstens die Fördereinrichtung und die Kamera eine in fester räumlicher Zuordnung zueinander stehende Montageeinheit, die an einer gemeinsamen Montagehalterung angeordnet ist. Bei dieser Vorrichtung braucht somit lediglich die gemeinsame Montagehalterung von einer geeigneten Stelle des Einsatzortes fixiert zu werden, wobei keinerlei Justierarbeiten erforderlich sind, da die Kamera und die Fördereinrichtung bereits in fester räumlicher Zuordnung auf der Montagehalterung justiert sind. Unmittelbar nach der Fixierung der Montageeinheit ist somit die erfindungsgemäße Vorrichtung einsetzbar und kann mit den vorgesehenen Prüfvorgängen beginnen. Diese Vorrichtung kann auch in vorteilhafter Weise in Verbindung mit anderen Prüfverfahren für Teile eingesetzt werden.

Die Fördereinrichtung weist zweckmäßigerweise ein Förderband auf, wobei die Kamera vorzugsweise an einer Seite der Fördereinrichtung und eine Beleuchtungseinrichtung an der gegenüberliegenden Seite angeordnet ist, um die zu prüfenden Teile im Gegenlichtverfahren bildmäßig zu erfassen, wobei andere störende Lichteinflüsse ausgeblendet werden können.

Um die zu prüfenden Teile vollständig in einem optimalen Winkel erfassen zu können, ist die Kamera in vorteilhafter Weise zur Förderfläche der Förderbahn so geneigt angeordnet, daß die untere Begrenzungslinie des Bildwinkelbereiches der Kamera im wesentlichen entlang der Förderfläche verläuft.

Zur Erleichterung und größeren Variabilität bei der Montage besitzt die Montagehalterung einen vorzugsweise mit einer Haltestange versehenen Montagegrundkörper, an dem die Fördereinrichtung, die Kamera und insbesondere die Beleuchtungseinrichtung fixiert sind. Ein abnehmbares, von der Fördereinrichtung durchquertes Gehäuse enthält alle Komponenten der Vorrichtung bis auf das Auswertegerät, so daß zum einen diese Komponenten geschützt untergebracht sind und zum anderen störende Lichteinfälle von außen das Meßergebnis nicht verfälschen können.

Ein Antriebsmotor für die Fördereinrichtung ist zweckmäßigerweise seitlich neben der Förderbahn und seitlich neben der Kamera angeordnet, um eine kompakte Anordnung zu erreichen. Zur Änderung der Förderrichtung ist die Fördereinrichtung zusammen mit dem daran befestigten Antriebsmotor und der Beleuchtungseinrichtung so umsetzbar ausgebildet, daß nach dem jeweiligen Umsetzen die Oberseite und Unterseite sowie der rechte und linke Förderendbereich miteinander vertauscht sind und der Antriebsmotor an der gegenüberliegenden Seite der Kamera angeordnet ist, so daß weiterhin dasselbe Gehäuse verwendet werden kann.

Die Fördereinrichtung besitzt in vorteilhafter Weise einen seitlich an der Förderbahn parallel dazu angeordneten insbesondere leistenartigen Aufsatz, der wenigstens eine mit seitlich gegen die Förderbahn gerichteten Druckluftdüsen versehene Aussonderungsstation für auszusondernde Teile besitzt. Jede Aussonderungsstation besteht dabei vorzugsweise aus mehreren insbesondere übereinander angeordneten Druckluftdüsen. Auf diese Weise sind die Aussonderungsstationen in einer kompakten Anordnung integriert und verschmutzungsgeschützt angeordnet.

Der leistenartige Aufsatz ist vorzugsweise an beiden Flachseiten der Fördereinrichtung montierbar, um bei Änderung der Förderrichtung entsprechend wieder auf die Oberseite umgesetzt werden zu können.

Um auch beispielsweise runde oder gerundete Teile transportieren und prüfen zu können, ist die Förderbahn seitlich so geneigt, daß die geförderten Teile am leistenartigen Aufsatz entlanggeführt werden.

Die Steuerventile für die Druckluft zu den Druckluftdüsen sind im leistenartigen Aufsatz oder in der Fördereinrichtung gegen Schmutz oder Beschädigungen geschützt untergebracht und stellen so auch keine Verletzungsgefahr dar.

Das Auswertegerät ist vorteilhafterweise über einen flexiblen Kabelstrang mit der Montageeinheit verbunden, so daß dieses auch als Steuergerät dienende Auswertegerät in beliebiger Relativposition zur Montageeinheit an einer geeigneten Stelle angeordnet bzw. aufgestellt werden kann.

Das Auswertegerät dient in vorteilhafter Weise zur Steuerung der Fördereinrichtung, zur Erfassung und Auswertung der Kamerasignale und vorzugsweise auch zur Steuerung der wenigstens einen Aussonderungsstation. Weiterhin besitzt das Auswertegerät zweckmäßigerweise eine Zähleinrichtung für Gut-Teile und/oder ausgesonderte Teile.

Weiterhin besitzt das Auswertegerät in vorteilhafter Weise Mittel zur automatischen Abschaltung der Fördereinrichtung und/oder einer Zuführeinrichtung zur Fördereinrichtung bei Erreichen einer vorgebbaren Anzahl von Gut-Teilen und/oder Schlecht-Teilen. Weiterhin kann die gesamte Vorrichtung auch in vorteilhafter Weise als Sortierstation zur Sortierung unterschiedlicher zugeführter Teile ausgebildet sein.

Eine zweckmäßige Vorrichtung zur Durchführung des erfindungsgemäßen Verfahrens ist in der Zeichnung dargestellt und in der nachfolgenden Beschreibung näher erläutert. Es zeigen:
- Figur 1: eine perspektivische Ansicht einer mechanischen und optischen Vorrichtung durch Durchführung des erfindungsgemäßen Verfahrens, die mit einem elektronischen Steuer- und Auswertegerät verbunden ist,
- Figur 2: der die Kamera zur Erfassung der passierenden Teile aufweisende zentrale Bereich der Vorrichtung in einer Draufsicht und
- Figur 3: der die Kamera aufweisende Bereich in einer Seitenansicht.

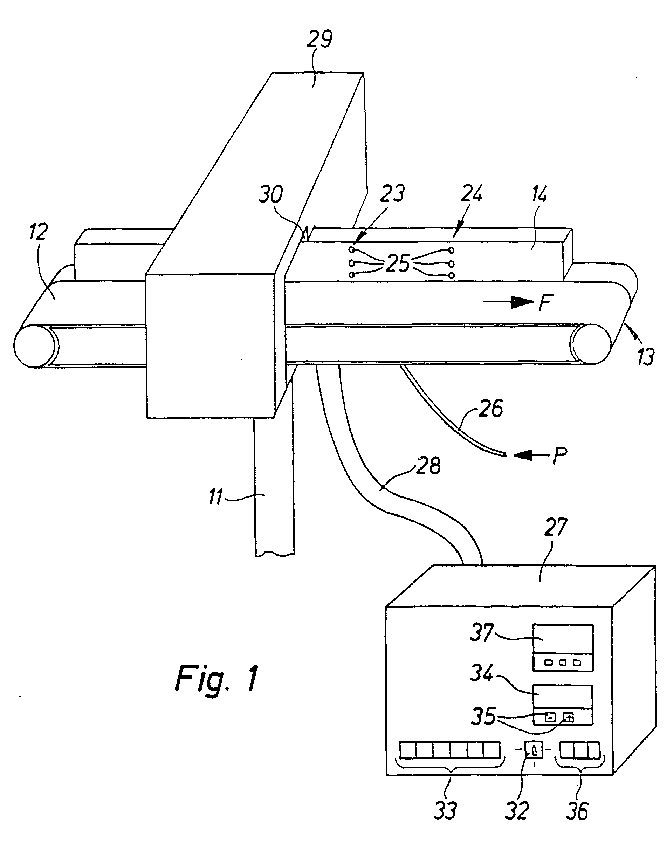

Bei dem in den Figuren 1 bis 3 dargestellten Ausführungsbeispiel wird ein gemeinsamer Montagegrundkörper oder Montageblock 10 an einer sich von ihm aus nach unten erstreckenden Montagestange 11 gehalten, durch die die gesamte Anordnung in beliebiger Weise an Maschinen montiert werden kann, bei denen abgehende oder zugeführte Teile daraufhin geprüft werden sollen, ob sie bezüglich ihrer Abmessungen und Orientierung einem vorgegebenen Muster innerhalb eines Toleranzbereiches entsprechen.

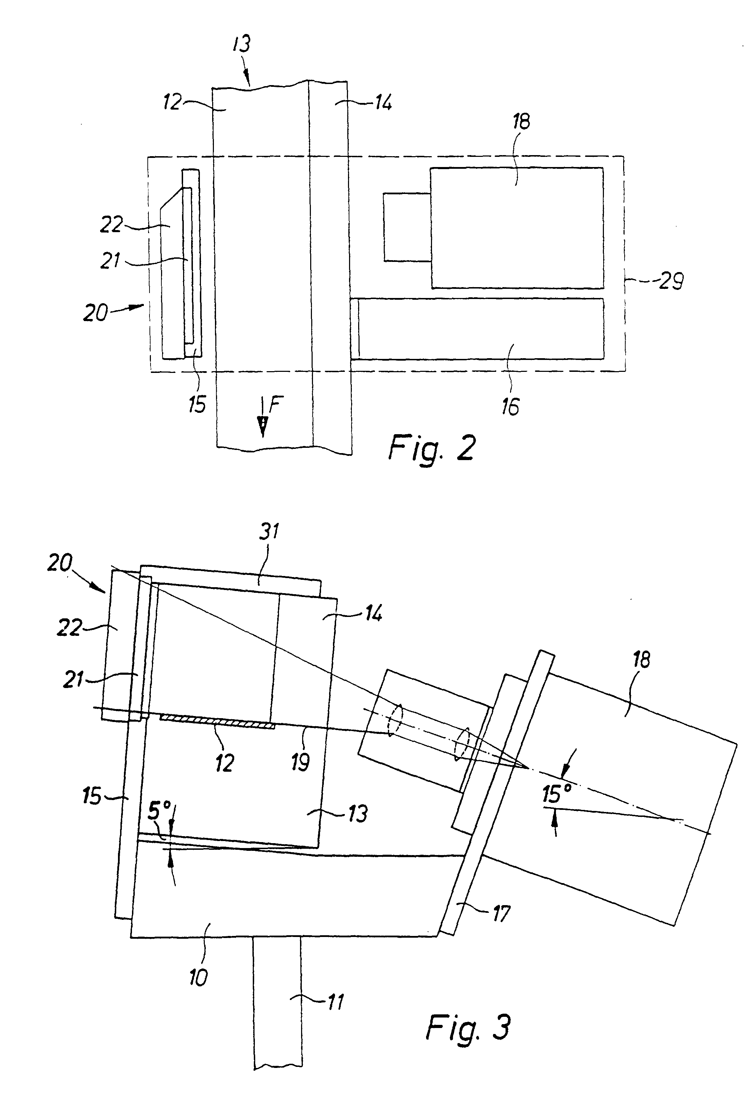

Auf dem Montageblock 10 ist als Fördereinrichtung eine im wesentlichen horizontal angeordnete, mit einem endlos umlaufenden Förderband 12 versehene Förderbandeinrichtung 13 montiert. Gemäß Figur 3 ist die Förderbandeinrichtung 13 quer zur Längsrichtung geringfügig geneigt, im Ausführungsbeispiel um 5°, damit die zu überprüfenden Teile an einem vom tiefsten Punkt des Förderbandes 12 aus seitlich nach oben sich erstreckenden leistenartigen Aufsatz 14 entlanggeführt werden können. Dies kann vor allem bei runden Teilen, wie Schrauben oder dergleichen erforderlich sein. Es ist selbstverständlich auch möglich, die Förderbandeinrichtung 13 exakt horizontal anzuordnen. Die Förderbandeinrichtung 13 ist dabei an einer seitlich des Montageblockes 10 nach oben vorstehenden Montageplatte 15 befestigt. Ein Antriebsmotor 16 für die Förderbandeinrichtung 13 steht quer zur Förderrichtung F gegenüber der Montageplatte 15 seitlich von der Förderbandeinrichtung 13 ab.

Gegenüber der Montageplatte 15 für die Förderbandeinrichtung 13 ist eine weitere Montageplatte 17 am Montageblock 10 fixiert, an der eine als Zeilenkamera ausgebildete Kamera 18 montiert ist. Die Kamera 18 ist dabei zur Querrichtung der Förderbandeinrichtung 13 so geneigt (im Ausführungsbeispiel beträgt der Neigungswinkel 15°), daß die untere Begrenzungslinie 19 des Bildwinkelbereiches der Kamera 18 in der Ebene des Förderbandes 12 liegt, so daß auf diesem Förderband transportierte Teile exakt und vollständig erfaßt werden können.

An der die Förderbandeinrichtung 13 haltenden Montageplatte 15 ist weiterhin eine Beleuchtungseinrichtung 20 angeordnet. Hierzu wird eine im wesentlichen rechteckige Glasplatte 21 an oder in der Montageplatte 17 gehalten, wobei an der zur Kamera 18 gegenüberliegenden Seite dieser Glasplatte 21 ein mit einer nicht dargestellten Lampenanordnung versehener flacher Beleuchtungskasten 22 an der Montageplatte 15 befestigt ist. Ein Umlenkspiegel oder ein Umlenkprisma im Inneren dieses Beleuchtungskastens 22 dient zur Umlenkung des Lichtes zur Kamera hin, so daß die Konturen der jeweils passierenden Teile durch die Kamera im Gegenlichtverfahren erfaßt werden können.

Zur Beleuchtung sind in der Beleuchtungseinrichtung 20 Leuchtdioden (LED) vorgesehen, die zum einen eine hohe Lebensdauer und zum anderen einen engen Lichtfrequenzbereich besitzen. Hierdurch kann beispielsweise die Kamera mit einem entsprechenden Bandfilter versehen werden, der im wesentlichen nur den Wellenbereich der Leuchtdioden durchläßt, so daß alle unerwünschten Lichteinfälle von außen oder aus anderen Lichtquellen in einfacher Weise ausgeblendet werden können. Die Anordnung wird dadurch unempfindlich gegen Störlichtquellen.

Am leistenartigen Aufsatz 14 sind zwei Aussonderungsstationen 23,24 angeordnet. Diese bestehen aus im Ausführungsbeispiel jeweils drei übereinander angeordneten Wegblasdüsen 25, wobei die Zahl dieser Wegblasdüsen 25 selbstverständlich jeweils wählbar ist. Auch die Zahl der Aussonderungsstationen 23,24 hängt von den jeweiligen Bedürfnissen ab. Die Wegblasdüsen 25 sind über nicht dargestellte Steuerventile mit einer Druckluftleitung 26 verbunden, die mit einer nicht dargestellten Druckluftquelle verbunden werden muß. Die Steuerung der Steuerventile erfolgt über ein elektronisches Steuer- und Auswertegerät 27, das über einen Kabelschlauch 28 mit der Montageeinheit verbunden ist. Bei einer Druckbeaufschlagung der Wegblasdüsen 25 wird durch die entstehenden seitlichen Druckstrahlen das jeweils passierende Teil seitlich vom Förderband 12 weggeblasen und dadurch ausgesondert. Die Steuerventile können dabei beispielsweise im leistenartigen Aufsatz 14 oder in der Förderbandeinrichtung 13 angeordnet sein. Im leistenartigen Aufsatz kann noch eine nichtdargestellte Drossel zum Regulieren der Druckluftstrahlen vorgesehen sein, die beispielsweise mittels eines Drehknopfes oder einer Justierhilfe einstellbar ist. Mit Hilfe dieser Drossel können die Luftstrahlen optimiert werden, d.h., bei leichten Kunststoffteilen wird der Luftstrahl relativ schwach eingestellt, während er bei schweren Metallteilen entsprechend stärker eingestellt wird.

In der in Figur 1 dargestellten Position verläuft die Förderrichtung von links nach rechts. Der rechte Bereich der Förderbandeinrichtung 13 ab der Kamera 18 ist wesentlich länger als der linke Bereich, da an ihm die Aussonderungsstationen 23,24 angeordnet sind. Für manche Anwendungen ist eine entgegengesetzte Förderrichtung erforderlich, so daß der ab der Kamera linke Bereich der Förderbandeinrichtung 13 der mit den Aussonderungsstationen 23,24 versehene längere Bereich sein muß. In einem solchen Fall wird ein die Kamera 18 den daneben angeordneten Antriebsmotor 16 und die Beleuchtungseinrichtung 20 überdeckendes Gehäuse 29 nach oben hin abgenommen. Dieses Gehäuse besitzt an seinen beiden vertikalen Längswandungen zwei Ausnehmungen 30, durch die die Förderbandeinrichtung 13 quer zur Längsrichtung des Gehäuses 19 verläuft. Das Gehäuse 29 liegt auf einer Halteplatte 31 auf, die den oberen Endbereich der Montageplatte 15 bzw. der Beleuchtungseinrichtung 20 mit dem oberen Endbereich des leistenartigen Aufsatzes 14 verbindet. Eventuell benötigte Montagemittel, wie Schrauben oder sonstige Klemmeinrichtungen sind zur Vereinfachung nicht dargestellt. Bei abgenommenem Gehäuse wird nun die Förderbandeinrichtung 13 gelöst und um 180° umgeschwenkt, so daß die bisherige Oberseite nun die Unterseite bildet und der linke mit dem rechten Endbereich vertauscht ist. Der zuvor abgenommene leistenartige Aufsatz 14 wird nun wieder entsprechend umgeschwenkt auf der Oberseite der Förderbandeinrichtung 13 neben dem Förderband 12 so montiert, daß die Aussonderungsstationen 23,24 nun auf der entgegengesetzten Seite gegenüber Figur 1 angeordnet sind. Die Positionen von Kamera 18 und Antriebsmotor 16 sind nun vertauscht, wozu sowohl die Kamera 18 als auch die Beleuchtungseinrichtung 20 entsprechend versetzt werden muß.

Die gesamte auf dem Montageblock 10 bzw. der Montagestange 11 montierte Montageeinheit ist fertig justiert und kann bei Bedarf ohne zusätzliche Justiervorgänge am jeweils benötigten Ort montiert werden. Beispielsweise wird der Fördereinrichtung eine Ausrichtstation vorgeschaltet, durch die die zu überprüfenden Teile in bestimmter vorgesehener Weise ausgerichtet auf das Förderband 12 gelangen und zur Prüfung an der Kamera 18 vorbeigeführt werden. Bei korrekter Orientierung und korrektem, maßgenauem Teil gelangt dieses am Ende des Förderbandes beispielsweise zu einer Montagestation, einer Weiterverarbeitungsstation oder einer Verpackungsstation. Bezüglich ihrer Gestalt oder Lage von einem Muster bei vorgegebener Toleranz abweichende Teile werden als sogenannte Schlecht-Teile behandelt und mittels der Aussonderungsstationen 23 seitlich weggeblasen. Beispielsweise werden als Gut-Teile nur solche behandelt, die enge Toleranzkriterien erfüllen. Durch die erste Ausblasstation werden solche Teile ausgesondert, die zwar diese engen Toleranzkriterien nicht erfüllen, sich jedoch noch innerhalb erweiterter Toleranzengrenzen befinden. Solche Teile können als Zweite-Wahl-Teile behandelt werden oder nochmals einer Vorsortierung oder Grundbearbeitung zugeführt werden. Teile, die auch außerhalb dieses weiteren Toleranzbereiches liegen, werden mittels der zweiten Aussonderungsstation 24 als Schlecht-Teile ausgesondert.

Es ist auch möglich, mittels der Kamera eine Differenzierung dahingehend vorzunehmen, daß ein Teil bezüglich seiner Maße zwar als Gut-Teil erkannt wird, daß jedoch eine fehlerhafte Orientierung festgestellt wird. Solche Teile können dann mittels einer der Aussonderungsstationen 23,24 ausgesondert und wieder der Ausrichtstation zugeführt werden.

Das Steuer- und Auswertegerät 27 besitzt einen Betriebsumschalter 32, durch den eine Umschaltung zwischen einem Lernmodus, einem Auswahlmodus und einem Automatikmodus möglich ist. Zunächst müssen Musterteile eingespeichert weden. Hierzu wird der beispielsweise als Schlüsselschalter ausgebildete Betriebsumschalter 32 in die Lernmodus-Stellung gelegt. Nun wird ein Speicherplatz durch Betätigen einer von sechs Speichertasten 33 ausgewählt. Diese Speichertasten sind beispielsweise als Leuchttasten ausgebildet. Nun läßt man im Lernmodus ein Musterteil mehrere Male mittels des Förderbandes 12 an der Kamera 18 passieren. Alternativ hierzu können auch mehrere Musterteile der gleichen Art vorbeigeführt werden. Durch die Kamera 18 wird jedesmal die Kontur des jeweiligen Teiles im Gegenlichtverfahren erfaßt. Diese Konturen werden nun im Steuer- und Auswertegerät 27 ausgewertet. Hierzu werden aus dieser Kontur Einzelkriterien, wie Gesamtlänge, Gesamthöhe, Fläche, Achsenlage, Oberflächenwelligkeit, Schwerpunktlage und dergleichen abgeleitet und gespeichert. Diese Einzelkriterien sind entweder bereits fest vorgegeben, oder es können aus einer vorgegebenen Auswahl bestimmte Einzelkriterien für ein jeweiliges Teil ausgewählt werden. Insbesondere bei größeren Teilen können die erfaßten Konturen auch in einzelne Bereiche unterteilt werden, oder jeden Bereich werden die Einzelkriterien einzeln ausgewertet, dabei sind auch unterschiedliche Gewichtungen sowohl der Einzelbereiche untereinander, wie auch der Einzelkriterien untereinander möglich. Die Auswählbarkeit der Einzelkriterien, die Unterteilung in Bereichen und die Wichtung von Einzelkriterien und Bereichen kann vorgegeben oder einstellbar sein. Hierzu sind dann je nach Ausführung am Steuer- und Auswertegerät 27 weitere nicht dargestellte Einstellvorrichtungen angeordnet. Durch das mehrmalige Passieren eines oder mehrerer Musterteile wird das Spektrum der als gut zu bewertenden Merkmale abgedeckt, d.h. das Steuer- und Auswertegerät 27 bewertet alle diese Teile noch als innerhalb eines Toleranzspektrums liegende Teile und baut dadurch ein Toleranzband auf. Die zu bewertenden Einzelkriterien erhalten dadurch jeweils unterschiedliche Toleranzbereiche. Auf einer LCD-Anzeigevorrichtung 34 kann die Merkmalsteuung wiedergegeben werden. Bei sechs vorgesehenen Speichertasten 33 können auf diese Weise nacheinander sechs verschiedene Musterteile eingespeichert werden, wobei diese Zahl in Abhängigkeit der Zahl der Speichertasten und der erforderlichen Speichereinrichtungen auch variieren kann.

In einem modifizierten Lernmodus können auch zunächst nach verschiedenen Musterteilen ein Schlecht-Teil oder mehrere Schlecht-Teile eingegeben werden. Das Steuer- und Auswertegerät 27 ermittelt dann selbständig die unterscheidenden Merkmale zwischen den Musterteilen und dem oder den Schlecht-Teilen, diese Unterschiede werden dann bei der späteren Prüfung besonders gewertet. Dabei ist es auch möglich, wenn sich nur ein bestimmter Bereich besonders unterscheidet, die Merkmale dieses Bereichs stärker zu bewerten. Ein solcher automatischer Lernmodus erspart Programmierarbeit und erleichtert die Benutzung der erfindungsgemäßen Vorrichtung.

Zur Auswahl zwischen den gespeicherten Werten wird der Betriebsumschalter 32 auf die Auswahlmodus-Stellung gelegt. Anschließend wird die den zu prüfenden Teilen entsprechende Speichertaste 33 betätigt. Es kann jetzt noch die Empfindlichkeit bzw. Toleranz mittels der unter der LCD-Anzeigevorrichtung 34 angeordneten Empfindlichkeitstasten 35 eingestellt werden. Hierzu werden verschiedene Testprüfungen vorgenommen, indem eine Anzahl von zu prüfenden Teilen probehalber der Prüfung zugeführt werden. Individuell kann nun mittels der Empfindlichkeitstaste 35 die zulässige Toleranz erhöht oder verringert werden. Nach abgeschlossener Einstellung wird der Betriebsumschalter 32 in den Automatikmodus umgelegt, und die eigentliche Prüfung kann beginnen. Hierbei wird in der gleichen Weise wie im Lernmodus bei jedem passierenden Teil die Kontur aufgenommen und daraus die Einzelkriterien abgeleitet. Diese werden dann mit den gespeicherten Einzelkriterien des Musterteiles verglichen. Liegen alle Einzelkriterien innerhalb des eingestellten Toleranzbereiches, so wird das Teil als Gut-Teil erkannt, andernfalls als Schlecht-Teil, wobei hier - wie bereits beschrieben - durch verschiedene Differenzierungen vorgenommen werden können. Die Aussonderung erfolgt durch Steuersignale seitens des Steuer- und Auswertegerätes 27, die den Steuerventilen der Aussonderungsstationen 23,24 zugeführt werden.

Drei beispielsweise als Leuchttaster ausgebildete Bedienungstasten 36 dienen zum Starten und Anhalten der Förderbandeinrichtung 13, wobei gleichzeitig der Meßvorgang eingeschaltet und ausgeschaltet wird, sofern zuvor die notwendigen Schritte durchgeführt worden sind. Eine der Bedienungstasten 36 ist als Statustaste ausgebildet, die beispielsweise beim Passieren eines Gut-Teiles aufleuchtet, um die ordnungsgemäße Funktion zu dokumentieren. Störungen können durch schnelles Blinken solcher Leuchttasten und/oder durch Anzeige eines Fehlercodes auf der LCD-Anzeigevorrichtung 34 kenntlich gemacht werden. Nach Beseitigung des Fehlers kann durch Betätigung der Statustaste die Fehlerbeseitigung kenntlich gemacht werden, worauf der angezeigte Fehlercode wieder gelöscht wird.

Das Steuer- und Auswertegerät 27 kann auch zur Steuerung von vor- und/oder nachgeschalteten Geräten dienen. Beispielsweise kann eine vorgeschaltete, die Teile zuführende Ausrichtstation über das Steuer- und Auswertegerät 27 mit einer Betriebsspannung versorgt werden. Bei Auftreten einer Störung oder beim Ausschalten der Förderbandeinrichtung 13 wird dann die vorgeschaltete Station automatisch mitausgeschaltet, damit keine weiteren Teile zugeführt werden. Weiterhin kann das Steuer- und Auswertegerät 27 noch mit einer Diagnoseschnittstelle zum Anschluß beispielsweise eines Laptops versehen sein, um damit Überprüfungen und Fehlerbeseitigungen an der Prüfvorrichtung vornehmen zu können.

Das Steuer- und Auswertegerät 27 ist weiterhin noch mit einer Zähleinrichtung 37 versehen, mit der wahlweise Gut-Teile und/oder Schlecht-Teile gezählt werden können, wobei die Zählung der Schlecht-Teile wiederum bei einer Unterteilung in verschiedene Rubriken differenziert werden kann. Mit Hilfe dieser Zähleinrichtung 37 kann auch beispielsweise eine gewünschte Zahl von Gut-Teilen vorgegeben werden. Nach Erreichen dieser Anzahl schaltet die Prüfvorrichtung dann automatisch ab, wozu auch die Abschaltung der die Teile zuführenden vorgeschalteten Maschine gehört.

Die beschriebene Vorrichtung kann auch zum Sortieren verschiedener Teile eingesetzt werden. Hierzu werden der Förderbandeinrichtung 13 die verschiedenen Teile zugeführt, die dann jeweils mittels der Kamera 18 nach entsprechender Auswertung erkannt werden. Das Aussortieren erfolgt dann mittels der Aussonderungsstationen 23,24, d.h. für vier verschiedene Sorten von Teilen sind vier Aussonderungsstationen erforderlich, wobei die jeweils einer Sorte zugeordneten Teile durch die jeweilige Aussonderungsstation in einen Auffangbehälter geblasen werden. Eine Sorte oder die als Schlecht-Teile erkannten Teile, die keiner der vier Rubriken zuzuordnen sind, werden dann am Ende des Föderbandes 12 abgeführt.

Es ist auch möglich, aus verschiedenartigen Teilen in einer vorgesehenen Weise Verpackungseinheiten zu bilden. Eine Verpackungseinheit besteht beispielsweise aus vier Teilen einer Sorte 1, zwei Teilen einer Sorte 2 und einem Teil einer Sorte 3. Die Teile werden unsortiert in beliebiger Reihenfolge der Förderbandeinrichtung 13 zugeführt. Durch die Kamera und Auswerteeinrichtung werden in der bereits beschriebenen Weise die Teile der Sorten 1, 2 und 3 erkannt und andere Teile oder Schlecht-Teile aussortiert. Hierbei kommt es nur auf die Maße, nicht auf die Orientierung dieser Teile an, so daß die Einzelkriterien entsprechend ausgewählt werden müssen.

Am Ende der Förderbandeinrichtung 13 werden beispielsweise nacheinander Verpackungsbeutel seitlich zugeführt. Die Teile der Sorten 1, 2 und 3 werden separat gezählt. Nach dem Passierenlassen eines Teiles der Sorte 3 werden weitere Teile der Sorte 3 ausgesondert und der Zuführeinrichtung rückgeführt, wenn noch Teile der Sorten 1 und 2 für die vorgesehene Verpackungseinheit fehlen. Es werden also auch Gut-Teile solange ausgesondert und rückgeführt, bis alle gewünschten Teile in der gewünschten Anzahl der Verpackungseinheit zugeführt worden sind. Dann wird am Bandende zur nächsten Verpackung gewechselt und das Spiel beginnt von vorne.

Will man die Teile dreidimensional erfassen, so wird anstelle der bisher beschriebenen Zeilenkamera eine 3-D-Kamera verwendet, oder 2 Kameras werden beispielsweise um einen rechten Winkel versetzt zueinander angeordnet.

## Patentansprüche

1. Verfahren zur Erkennung falsch orientierter und/oder von einem vorgegebenen Muster abweichender Teile, die mittels einer Fördereinrichtung an wenistens einer die Konturen der Teile erfassenden Kamera vorbeigeführt werden, wobei bei einer vorgebbaren Abweichung von gespeicherten Musterwerten das betreffende Teil als fehlerhaft erkannt und/oder ausgesondert wird, wobei aus dem der Kontur des jeweiligen Teiles entsprechenden Bildsignal der Kamera (18) mehrere Einzelkriterien, wie Gesamtlänge, Gesamthöhe, Fläche, Achsenlage, Oberflächenwelligkeit, Schwerpunktlage, abgeleitet werden, wobei diese Einzelkriterien mit den aus wenigstens einem Musterteil abgeleiteten entsprechenden Einzelkriterien verglichen werden, und wobei wenigstens ein Musterteil in einem Lernmodus erfaßbar ist, wobei das entsprechende Bildsignal oder die davon abgeleiteten Einzelkriterien gespeichert werden, um in einem Betriebsmodus für den Vergleich zur Verfügung zu stehen, **dadurch gekennzeichnet, daß** mehrere unterschiedliche Musterteile im Lernmodus erfaßbar sind, wobei im Betriebsmodus eines dieser Musterteile für den Vergleich auswählbar ist, und daß für den Betriebsmodus die Empfindlichkeit (Toleranz) bei der Erkennung in wenigstens einer Stufe oder kontinuierlich einstellbar ist.

2. Verfahren nach Anspruch 1, **dadurch gekennzeichnet, daß** die Einzelkriterien unterschiedlich gewichtet werden und/oder vorwählbar sind.

3. Verfahren nach Anspruch 1 oder 2, **dadurch gekennzeichnet, daß** das Bildsignal in verschiedene Bereiche unterteilt wird, und daß die Bereiche unabhängig voneinander bezüglich der Einzelkriterien ausgewertet und vorzugsweise unterschiedlich gewichtet werden.

4. Verfahren nach Anspruch 2 oder 3, **dadurch gekennzeichnet, daß** die unterschiedliche Gewichtung einstellbar ist.

5. Verfahren nach einem der vorhergehenden Ansprüche, **dadurch gekennzeichnet, daß** jedes Musterteil im Lernmodus mehrfach erfaßt wird, oder daß mehrere Musterteile der selben Sorte nacheinander erfaßt werden, oder daß Musterteile und Schlecht-Teile erfaßt werden.

6. Verfahren nach einem der vorhergehenden Ansprüche, **dadurch gekennzeichnet, daß** auszusondernde Teile durch wenigstens einen Druckluftstrahl von der Fördereinrichtung (13) weggeblasen werden, wobei die Teile auf der Fördereinrichtung (13) insbesondere mehrere Aussonderungsstationen (23,24) passieren, die nach unterschiedlichen Kriterien aussondern.

7. Verfahren nach Anspruch 6, **dadurch gekennzeichnet, daß** Kriterien für die Aussonderung Überschreitungen wenigstens eines Toleranzbereiches und/oder falsche Orientierungen und/oder die Sortierung verschiedenartiger Gut-Teile sind.

8. Verfahren nach einem der vorhergehenden Ansprüche, **dadurch gekennzeichnet, daß** die an wenigstens einer Aussonderungsstation (23,24) ausgesonderten Teile und/oder die nicht ausgesonderten Teile mittels einer Zähleinrichtung (37) gezählt werden, wobei vorzugsweise bei Erreichen einer vorgegebenen Anzahl von Gut-Teilen und/oder Schlecht-Teilen die Fördereinrichtung (13) und/oder eine Zuführeinrichtung zur Fördereinrichtung (13) automatisch abgeschaltet wird.

9. Verfahren nach einem der vorhergehenden Ansprüche, **dadurch gekennzeichnet, daß** eine Zeilenkamera als Kamera (18) verwendet wird, und daß die Verarbeitung der Konturen insbesondere zeilenorientiert erfolgt.

10. Verfahren nach einem der vorhergehenden Ansprüche, **dadurch gekennzeichnet, daß** zwei Kameras oder eine 3-D-Kamera zur räumlichen Erfassung der Teile verwendet werden.

11. Vorrichtung zur Erkennung falsch orientierter und/oder von einem vorgegebenen Muster abweichender Teile, mit einer Fördereinrichtung für die Teile und einer Kamera zur Erzeugung von Bildsignalen der passierenden Teile, wobei wenigstens die Fördereinrichtung (13) und die Kamera (18) in fester räumlicher Zuordnung zueinander stehen, mit einem elektronischen Auswertegerät zum Vergleich der erfaßten Bildsignale oder davon abgeleiteter Werte mit entsprechenden Speicherwerten von Musterteilen und mit Mitteln zur Kennzeichnung und/oder Aussonderung von als fehlerhaft erkannten oder aus anderen Gründen auszusondernden Teilen zur Durchführung des Verfahrens nach einem der vorhergehenden Ansprüche, **dadurch gekennzeichnet, daß** die Fördereinrichtung (13) und die Kamera (18) eine Montageeinheit bilden, die justierfrei an einer gemeinsamen Montagehalterung (10,11) angeordnet ist.

12. Vorrichtung nach Anspruch 11, **dadurch gekennzeichnet, daß** die Kamera (18) an einer Seite der Fördereinrichtung (13) und eine insbesondere Leuchtdioden (LED) aufweisende Beleuchtungseinrichtung (20) an der gegenüberliegenden Seite angeordnet ist.

13. Vorrichtung nach Anspruch 11 oder 12, **dadurch gekennzeichnet, daß** die Kamera (18) zur Förderfläche der Förderbahn so geneigt angeordnet ist, daß die untere Begrenzungslinie (19) des Bildwinkelbereiches der Kamera (18) im wesentlichen entlang der Förderfläche verläuft.

14. Vorrichtung nach einem der Ansprüche 11 bis 13, **dadurch gekennzeichnet, daß** die Montagehalterung einen vorzugsweise mit einer Haltestange (11) versehenen Montagegrundkörper (10) besitzt, an dem die Fördereinrichtung (13), die Kamera (18) und insbesondere die Beleuchtungseinrichtung (20) fixiert sind.

15. Vorrichtung nach einem der Ansprüche 11 bis 14, **dadurch gekennzeichnet, daß** ein abnehmbares, von der Fördereinrichtung (13) durchquertes Gehäuse (29) vorgesehen ist, das alle Komponenten der Vorrichtung bis auf das Auswertegerät (27) enthält.

16. Vorrichtung nach einem der Ansprüche 11 bis 15, **dadurch gekennzeichnet, daß** ein Antriebsmotor (16) für die Fördereinrichtung (13) seitlich neben der Förderbahn und seitlich neben der Kamera (18) angeordnet ist.

17. Vorrichtung nach Anspruch 15 und 16, **dadurch gekennzeichnet, daß** die Fördereinrichtung (13) zusammen mit dem daran befestigten Antriebsmotor (16) und der Beleuchtungseinrichtung (20) so umsetzbar ausgebildet ist, daß nach dem jeweiligen Umsetzen die Oberseite und Unterseite sowie der rechte und linke Förderendbereich miteinander vertauscht sind und der Antriebsmotor (16) an der gegenüberliegenden Seite der Kamera (18) angeordnet ist.

18. Vorrichtung nach einem der Ansprüche 11 bis 17, **dadurch gekennzeichnet, daß** die Fördereinrichtung (13) einen seitlich an der Förderbahn parallel dazu angeordneten, insbesondere leistenartigen Aufsatz (14) besitzt, der wenigstens eine mit seitlich gegen die Förderbahn gerichteten Druckluftdüsen (25) versehene Aussonderungsstation (23,24) für auszusondernde Teile besitzt, wobei der Druckluftstrahl in seiner Stärke vorzugsweise einstellbar ausgebildet ist und jede Aussonderungsstation (23,24) vorzugsweise aus mehreren insbesondere übereinander angeordneten Druckluftdüsen (25) besteht.

19. Vorrichtung nach Anspruch 18, **dadurch gekennzeichnet, daß** der leistenartige Aufsatz (14) an beiden Flachseiten der Fördereinrichtung (13) montierbar ist.

20. Vorrichtung nach Anspruch 18 oder 19, **dadurch gekennzeichnet, daß** die Förderbahn seitlich so geneigt ist, daß die geförderten Teile am leistenartigen Aufsatz (14) entlanggeführt werden.

21. Vorrichtung nach einem der Ansprüche 18 bis 20, **dadurch gekennzeichnet, daß** Steuerventile für die Druckluft zu den Druckluftdüsen (25) im leistenartigen Aufsatz (14) und/oder in der Fördereinrichtung (13) angeordnet sind.

22. Vorrichtung nach einem der Ansprüche 11 bis 21, **dadurch gekennzeichnet, daß** das Auswertegerät (27) über einen flexiblen Kabelstrang (28) mit der Montageeinheit verbunden ist und vorzugsweise zur Steuerung der Fördereinrichtung (13), zur Erfassung und Auswertung der Kamerasignale und/oder auch zur Steuerung der wenigstens einen Aussonderungsstation (25) ausgebildet ist.

23. Vorrichtung nach Anspruch 22, **dadurch gekennzeichnet, daß** das Auswertegerät (27) eine Zähleinrichtung (37) für Gut-Teile und/oder ausgesonderte Teile besitzt.

24. Vorrichtung nach einem der Ansprüche 11 bis 23, **dadurch gekennzeichnet, daß** das Auswertegerät (27) Mittel zur automatischen Abschaltung der Fördereinrichtung (13) und/oder einer Zuführeinrichtung zur Fördereinrichtung (13) bei Erreichen einer vorgebbaren Anzahl von Gut-Teilen und/oder Schlecht-Teilen aufweist.

25. Vorrichtung nach einem der Ansprüche 11 bis 24, **gekennzeichnet durch** die Ausbildung als Sortierstation.

26. Vorrichtung nach einem der Ansprüche 11 bis 25, **dadurch gekennzeichnet, daß** zur dreidimensionalen Erfassung der Teile eine 3-D-Kamera oder 2 Kameras vorgesehen sind.

## Revendications

1. Procédé de détection de pièces mal orientées et/ou différentes d'un modèle imposé, qui sont transportées par un dispositif de transport devant au moins une caméra détectant les contours des pièces, la pièce étant jugée défectueuse et/ou mise de côté en cas d'écart prédéterminable de valeurs modèles enregistrées, plusieurs critères individuels comme la longueur totale, la hauteur totale, la surface, la position axiale, l'ondulation de surface, la position du centre de gravité étant déduites du signal d'image de la caméra (18) correspondant au contour de la pièce respective, ces critères individuels étant comparés avec les critères individuels dérivés d'au moins une pièce modèle, et au moins une pièce modèle pouvant être analysée dans un mode d'apprentissage, le signal d'image correspondant ou les critères individuels qui en sont déduits étant enregistrés afin d'être disponibles pour la comparaison dans un mode d'exploitation, **caractérisé en ce que** plusieurs pièces modèles différentes peuvent être analysées en mode d'apprentissage, l'une de ces pièces modèles pouvant être sélectionnée pour la comparaison en mode d'exploitation, et en ce la sensibilité (tolérance) lors de la détection est réglable pour le mode d'exploitation avec au moins un échelon ou de manière continue.

2. Procédé selon la revendication 1, **caractérisé en ce que** les critères individuels sont pondérés de manière variable et/ou sont présélectionnables.

3. Procédé selon la revendication 1 ou 2, **caractérisé en ce que** le signal d'image est subdivisé en différents domaines, et **en ce que** les domaines sont analysés indépendamment les uns des autres par rapport aux critères individuels et sont de préférence pondérés de manière variable.

4. Procédé selon la revendication 2 ou 3, **caractérisé en ce que** la pondération variable est réglable.

5. Procédé selon l'une des revendications précédentes, **caractérisé en ce que** chaque pièce modèle est analysée plusieurs fois en mode d'apprentissage, ou **en ce que** plusieurs pièces modèles de la même sorte sont analysées successivement, ou **en ce que** des pièces modèles et des pièces mauvaises sont analysées.

6. Procédé selon l'une des revendications précédentes, **caractérisé en ce que** des pièces à mettre de côté sont soufflées hors du dispositif de transport (13) par au moins un jet d'air comprimé, les pièces sur le dispositif de transport (13) passant en particulier plusieurs postes de mise de côté (23, 24) qui mettent de côté en fonction de différents critères.

7. Procédé selon la revendication 6, **caractérisé en ce que** des critères pour la mise de côté sont des dépassement d'au moins une plage de tolérance et/ou de mauvaises orientations et/ou le tri de pièces bonnes de divers types.

8. Procédé selon l'une des revendications précédentes, **caractérisé en ce que** les pièces mises de côté au niveau d'au moins un poste de mise de côté (23, 24) et/ou les pièces non mises de côté sont comptées au moyen d'un dispositif de comptage (37), le dispositif de transport (13) et/ou un dispositif d'alimentation sur le dispositif de transport (13) étant de préférence automatiquement arrêté dès qu'on atteint un nombre prédéterminé de pièces bonnes et/ou de pièces mauvaises.

9. Procédé selon l'une des revendications précédentes, **caractérisé en ce qu'**une caméra à lignes est employée comme caméra (18) et **en ce que** le traitement des contours s'effectue en particulier d'après les lignes.

10. Procédé selon l'une des revendications précédentes, **caractérisé en ce que** deux caméras ou une caméra 3D sont employées pour l'analyse spatiale des pièces.

11. Dispositif de détection de pièces mal orientées et/ou différentes d'un modèle imposé, avec un dispositif de transport pour les pièces et une caméra pour produire des signaux d'image des pièces qui passent, au moins le dispositif de transport (13) et la caméra (18) étant en relation spéciale fixe l'un par rapport à l'autre, avec un appareil électronique d'analyse pour comparer les signaux d'image relevés ou des valeurs qui en sont déduites avec des valeurs enregistrées correspondantes de pièces modèles et avec des moyens de caractérisation et/ou mise de côté de pièces jugées défectueuses ou devant être mises de côté pour d'autres raisons, pour appliquer le procédé selon l'une des revendications précédentes, **caractérisé en ce que** le dispositif de transport (13) et la caméra (18) forment une unité de montage qui est placée sans ajustage sur un support de montage commun (10, 11).

12. Dispositif selon la revendication 11, **caractérisé en ce que** la caméra (18) est placée d'un côté du dispositif de transport (13) et un dispositif d'éclairage (20) présentant en particulier des diodes électroluminescentes (LED) du côté opposé.

13. Dispositif selon la revendication 11 ou 12, **caractérisé en ce que** la caméra (18) est placée inclinée en direction de la surface de transport de la voie de transport, de telle manière que la ligne limite inférieure (19) de la plage d'angle de vision de la caméra (18) passe pour l'essentiel le long de la surface de transport.

14. Dispositif selon l'une des revendications 11 à 13, **caractérisé en ce que** le support de montage possède un corps de base de montage (10) muni de préférence d'une tige de maintien (11), sur lequel sont fixés le dispositif de transport (13), la caméra (18) et en particulier le dispositif d'éclairage (20).

15. Dispositif selon l'une des revendications 11 à 14, **caractérisé en ce qu'**un boîtier amovible (29) traversé par le dispositif de transport (13) est prévu, qui contient tous les éléments du dispositif à l'exception de l'appareil d'analyse (27).

16. Dispositif selon l'une des revendications 11 à 15, **caractérisé en ce qu'**un moteur d'entraînement (16) pour le dispositif de transport (13) est prévu latéralement à côté de la voie de transport et latéralement à côté de la caméra (18).

17. Dispositif selon les revendications 15 et 16, **caractérisé en ce que** le dispositif de transport (13) est conformé avec le moteur d'entraînement (16) fixé à lui et avec le dispositif d'éclairage (20) d'une manière inversible de telle sorte qu'après le retournement respectif, le dessus et le dessous ainsi que la partie d'extrémité de transport de droite et de gauche sont échangées et le moteur d'entraînement (16) est placé du côté opposé à la caméra (18).

18. Dispositif selon l'une des revendications 11 à 17, **caractérisé en ce que** le dispositif de transport (13) possède un chapeau (14), en particulier de type barre, placé latéralement à la voie de transport et parallèle à elle, qui possède au moins un poste de mise de côté (23, 24) muni de buses d'air comprimé (25) tournées vers la voie de transport, pour des pièces à mettre de côté, le jet d'air comprimé étant de préférence d'une intensité réglable et chaque poste de mise de côté (23, 24) étant composé de préférence de plusieurs buses d'air comprimé (25), en particulier superposées.

19. Dispositif selon la revendication 18, **caractérisé en ce que** le chapeau (14) de type barre peut être monté sur les deux faces plates du dispositif de transport (13).

20. Dispositif selon la revendication 18 ou 19, **caractérisé en ce que** la voie de transport est inclinée latéralement de telle manière que les pièces transportées passent le long du chapeau (14) de type barre.

21. Dispositif selon l'une des revendications 18 à 20, **caractérisé en ce que** des vannes de régulation pour l'air comprimé envoyé aux buses d'air comprimé (25) sont placées dans le chapeau (14) de type barre et/ou dans le dispositif de transport (13).

22. Dispositif selon l'une des revendications 11 à 21, **caractérisé en ce que** l'appareil d'analyse (27) est relié par un faisceau de câbles souples (28) à l'unité de montage et est conformé de préférence pour piloter le dispositif de transport (13), pour détecter et analyser les signaux de la caméra et/ou également pour piloter le poste de mise de côté (25) au nombre d'au moins un.

23. Dispositif selon la revendication 22, **caractérisé en ce que** l'appareil d'analyse (27) possède un dispositif de comptage (37) pour des pièces bonnes et/ou des pièces mises de côté.

24. Dispositif selon l'une des revendications 11 à 23, **caractérisé en ce que** l'appareil d'analyse (27) présente des moyens pour arrêter automatiquement le dispositif de transport (13) et/ou un dispositif d'alimentation du dispositif de transport dès qu'on atteint un nombre prédéterminable de pièces bonnes et/ou de pièces mauvaises.

25. Dispositif selon l'une des revendications 11 à 24, **caractérisé par** la configuration en poste de tri.

26. Dispositif selon l'une des revendications 11 à 25, **caractérisé en ce qu'**une caméra 3D ou 2 caméras sont prévues pour la détection tridimensionnelle des pièces.

## Claims

1. Method of detecting items which are incorrectly oriented and/or deviate from a preset pattern, and which are guided by means of a conveyor past a camera recording one or more of the contours of the items, wherein in the event of a presettable deviation from stored pattern values the item concerned is detected as being defective and/or is segregated out, wherein from the video signal of the camera (18) corresponding to the contour of the item concerned, several specific criteria such as overall length, overall height, axial length, surface waviness, centre of gravity are derived, wherein these specific criteria are compared with the corresponding specific criteria derived from one or more specimen items, and wherein at least one specimen item may be recorded in a teach-in mode, wherein the corresponding video signal or the specific criteria derived therefrom are stored, so as to be available for comparison in an operating mode, **characterised in that** several different specimen items may be recorded in teach-in mode, wherein one of these specimen items may be selected in operating mode for comparison, and that for the operating mode the sensitivity (tolerance) for detection may be set in one or more steps or be made continuous.

2. Method according to claim 1, **characterised in that** the specific criteria may be differently weighted and/or preselectable.

3. Method according to claim 1 or 2, **characterised in that** the video signal is divided into various sections, and that the sections are evaluated against the specific criteria independently of one another, and are preferably differently weighted.

4. Method according to claim 2 or 3, **characterised in that** the different weightings are adjustable.

5. Method according to any of the preceding claims, **characterised in that** each specimen item is recorded several times in teach-in mode, or that several specimen items of the same type are recorded successively, or that specimen items and bad items are recorded.

6. Method according to any of the preceding claims, **characterised in that** items to be segregated out are blown away from the conveyor (13) by one or more compressed air jets, wherein the items on the conveyor (13) pass in particular several segregation points (23, 24) which segregate according to different criteria.

7. Method according to claim 6, **characterised in that** the criteria for segregation are the exceeding of one or more tolerance ranges and/or incorrect orientation and/or the sorting of different types of good items.

8. Method according to any of the preceding claims, **characterised in that** the items segregated at one or more segregation points (23, 24) and/or the items not segregated are counted by means of a counter (37), wherein preferably on reaching a preset number of good items and/or bad items, the conveyor (13) and/or a feed unit to the conveyor (13) is or are automatically switched off.

9. Method according to any of the preceding claims, **characterised in that** a line scan camera is used as camera (18), and that processing of the contours is effected in particular on a line-oriented basis.

10. Method according to any of the preceding claims, **characterised in that** two cameras or one 3-D camera are used for spatial coverage of the items.

11. Device for the detection of items which are incorrectly oriented and/or deviate from a preset pattern, with a conveyor for the items and a camera to generate video signals of the passing items, wherein at least the conveyor (13) and the camera (18) are in a fixed spatial alignment relative to one another, with an electronic evaluation unit for comparing the recorded video signals or values derived therefrom with corresponding stored values of specimen items, and with means of marking and/or segregating items recognised as defective or to be segregated for other reasons in order to implement the method according to any of the preceding claims, **characterised in that** the conveyor (13) and the camera (18) form a mounting unit which is fitted without adjustment to a common mounting fixture (10, 11).

12. Device according to claim 11, **characterised in that** the camera (18) is mounted on one side of the conveyor (13), and an illumination device (20) with in particular light-emitting diodes (LED) is mounted on the opposite side.

13. Device according to claim 11 or 12, **characterised in that** the camera (18) is so tilted towards the conveyor surface of the conveyor track that the lower boundary line (19) of the field of view of the camera (18) runs substantially along the conveyor surface.

14. Device according to any of claims 11 to 13, **characterised in that** the mounting fixture has a mounting base (10) preferably provided with a retaining bar (11), to which the conveyor (13), the camera (18) and in particular the illumination device (20) are fixed.

15. Device according to any of claims 11 to 14, **characterised in that** a removable housing (29), through which the conveyor (13) passes, is provided and contains all components of the device apart from the evaluation unit (27).

16. Device according to any of claims 11 to 15, **characterised in that** a drive motor (16) for the conveyor (13) is mounted alongside the conveyor track and alongside the camera (18).

17. Device according to claims 15 and 16, **characterised in that** the conveyor (13), together with the drive motor (16) attached to it and the illumination device (20), is designed to be so reset that after each resetting the top and bottom together with the right and left-hand end areas of the conveyor are interchanged, and the drive motor (16) is located on the opposite side of the camera (18).

18. Device according to any of claims 11 to 17, **characterised in that** the conveyor (13) has an attachment (14), in particular rail-like, mounted parallel to the side of the conveyor track, with segregation points (23, 24) for items to be segregated and provided with one or more compressed air nozzles (25) directed sideways against the conveyor track, wherein the strength of the compressed air jet is preferably adjustable, and each segregation point (23, 24) is preferably comprised of several compressed air nozzles (25) in particular arranged one above the other.

19. Device according to claim 18, **characterised in that** the rail-like attachment (14) may be fitted to both flat sides of the conveyor (13).

20. Device according to claim 18 or 19, **characterised in that** the conveyor track is so tilted to the side that the conveyed items are guided along the rail-like attachment (14).

21. Device according to any of claims 18 to 20, **characterised in that** control valves for the compressed air to the compressed air nozzles (25) are provided in the rail-like attachment (14) and/or in the conveyor (13).

22. Device according to any of claims 11 to 21, **characterised in that** the evaluation unit (27) is connected to the mounting unit via a flexible cable strand (28), and is preferably designed to control the conveyor (13), to record and evaluate the camera signals and/or also to control the segregation point or points (25).

23. Device according to claim 22, **characterised in that** the evaluation unit (27) has a counter (37) for good items and/or segregated items.

24. Device according to any of claims 11 to 23, **characterised in that** the evaluation unit (27) has means for automatic switch-off of the conveyor (13) and/or a feed unit to the conveyor (13) on reaching a presettable number of good items and/or bad items.

25. Device according to any of claims 11 to 24, **characterised by** its design as a sorting station.

26. Device according to any of claims 11 to 25, **characterised in that** one 3-D camera or 2 cameras is or are provided for three-dimensional coverage of the items.
